# EUROPEAN PATENT SPECIFICATION

(11) **EP 2 714 863 B1**
(45) Date of publication and mention of the grant of the patent: **12.09.2018**
(21) Application number: 12731511.7
(22) Date of filing: 28.05.2012
(51) Int. Cl.: C10L 5/44, C10B 53/02, C10L 5/36

(54) **METHOD FOR PRODUCING BIO-COKE**
VERFAHREN ZUR HERSTELLUNG VON BIOKOKS
PROCÉDÉ DE PRODUCTION DE BIOCHARBON

(30) Priority: 27.05.2011 FI 20110180; 25.05.2012 WO PCT/FI2012/050505
(43) Date of publication of application: 09.04.2014
(60) Divisional application: 14182084.5
(73) Proprietor: Outotec (Finland) Oy, 02230 Espoo (FI)
(72) Inventor: METSÄRINTA, Maija-Leena, FI-28450 Vanha-Ulvila (FI)
(74) Representative: Kolster Oy Ab
(86) International application number: PCT/FI2012/050512
(87) International publication number: WO 2012/164162

(56) References cited:
- EP-A1- 2 025 738
- WO-A1-03/087276
- CA-A1- 1 054 088
- US-A1- 2010 251 616

## Description

### FIELD OF THE INVENTION

The invention relates to a method for the continuous production of bio-coke suitable for use in metallurgical industry by a method where the purpose is to obtain bio-coke with a desired lump size, sufficient strength uniform in every direction, low ash content, low volatiles content as well as low phosphorus and sulphur content, and low electrical conductivity, by using raw materials that enable economic production of bio-coke.

### BACKGROUND OF THE INVENTION

In recent decades the coke used in metallurgical industry has been manufactured mostly from fossil carbon. Nowadays, measures to combat climate change also have to be taken into account more emphatically in metallurgical processes and in the selection of materials used in them. Therefore biomass-based coke will make a viable alternative to fossil carbon in the future and, in addition, it may also allow participation in carbon dioxide emissions trading.

The production of bio-coke from the same raw materials as those used by the sawmill and pulp industries weakens its economy. Cheaper biomass materials are currently used for energy production. These materials include low-grade timber, crown mass, stumps, large decayed/defective wood, waste wood from construction, peat, straw, reed canary grass, surplus grain etc. A common problem with these materials is that their ash and impurity contents are higher than those of pure wood.

For instance, a considerable proportion of the wood in an entire tree is contained in its stump. The stump of a spruce, for example, may contain as much as about 30% of the stemwood volume of the tree. On the other hand, spruce stumps are loosely attached to the ground and there are 600 to 940 spruce stumps per logging area hectare. It is sufficient to maintain the land's growing power if 5 to 10 % of the stumps are left in the forest.

Charcoal or wood coke, which is a certain kind of bio-coke, has been manufactured in batch fashion for thousands of years. Batch carbonization has been carried out for example in different kinds of pits, retorts or wagon retorts. Continuous carbonization is carried out for instance in a horizontal or vertical retort, drum kiln or fluidized bed reactor.

Continuous carbonization processes taking place in a vertical shaft kiln (a retort) are represented by the Lambiotte and Lurgi processes. The wood material of a fairly large unit size, e.g. 200 to 400 mm, is fed into the kiln from the top and travels through the drying, carbonizing and cooling steps in the kiln. The gases are conveyed upwards from below. The steps may be separated from each other by a gas-lock.

The continuous coking of peat and wood in a drum kiln, where the lump size is a maximum of 50 mm, is described for example in CA application publication 1 054 088 (FI56549). The method is described in more detail as applied to the processing of eucalyptus wood, for example in the Master's thesis: Latva-Somppi, J.: Study of carbonization of eucalyptus, pages 25 - 28, Helsinki University of Technology 1989. First the wood is chipped and after this it is dried by means of the exhaust gases exiting a combustion chamber. The exhaust gases may be conveyed to a feed silo. The dried wood is screened, and fine material may be fed into the same combustion chamber in which the gas exiting coking is burned. When the moisture content of the wood has fallen to a value below 10%, it may be fed into the coking furnace. The coking furnace functions on the countercurrent principle, i.e. hot gases and wood material are fed into the furnace from opposite ends. The carbonization temperature is 500 to 900°C depending on the requirements set for the charcoal. The temperature required for carbonization is achieved by burning a part of the gases formed in carbonization, and additional heat is obtained with an auxiliary burner. The gases, tar and fly ash formed in carbonization are burned in the combustion chamber as is the waste wood generated in wood chipping. After combustion, the hot combustion gases are conveyed to a boiler, and water is fed into the piping thereof to produce pressurized steam and then electricity and district heat. The charcoal that is produced is cooled for example with water, after which the charcoal is classified. Fine carbon material can be briquetted or burned in the combustion chamber.

A continuous carbonization process has been developed for carbonizing sawdust and other wood waste in a fluidized bed furnace. Some of these methods are disclosed for example in US patent publications 3,977,947, 4,510,021 and 6,808,390. An inert bed, such as a bed of sand, is commonly used, but the first one of US publications mentions the use of previously carbonized material as the bed material. In most cases, wood is fed into the bed material, although it can also be fed from the upper section of the furnace. In each method described carbonization is carried out at a maximum temperature of 650 °C.

The cited publications mostly discuss the cheapest possible production of bio-coke from biomass, but they completely fail to take into account the strict quality criteria for bio-coke required in the fabrication of ferroalloys, for instance.

Metallurgical coke is subjected to both quality and cost requirements that may be addressed by selection of raw materials, process units and process conditions. Studies have shown that the compressive strength of wood coke is not a clear-cut matter; instead the compressive resistance along the grain is considerably higher than perpendicularly against the grain. The wood quality and carbonization temperature also affect strength. On the other hand, research has shown that ash and impurity components concentrate in the finer fraction of bio-coke. The volatile substances in bio-coke decrease as the carbonization temperature rises. The electrical conductivity and electrical resistance of the coke can also be adjusted using the carbonization temperature.

### OBJECT OF THE INVENTION

The object of the present invention is to disclose a method for a continuous production of bio-coke, which meets the quality criteria set by the metallurgical industry, particularly with regard to the fabrication of ferroalloys, and produces coke from low-cost raw materials by the method presented, taking the required characteristics of coal into account.

### SUMMARY OF THE INVENTION

According to one aspect the invention relates to a method for a continuous production of briquetted bio-coke to be used in the metallurgical industry, whereby the biomass raw material that is to be processed in order to produce bio-coke briquettes with low impurity, sulphur and phosphorus content, sufficient strength and low volatiles content, as well as the desired strength and lump size, has its mechanical impurities removed and is pre-comminuted, for example by crushing, and pre-dried before transportation to the processing site and comminution to processing fineness.

According to another aspect of the invention the method for continuous production of bio-coke to be used in metallurgical industry comprises
- providing biomass raw material,
- removing mechanical impurities from the biomass raw material,
- pre-comminuting the biomass raw material,
- pre-drying the biomass raw material,
- comminuting the biomass raw material into a homogeneous particle-like form,
- drying the biomass comminuted into a particle-like form, and
- carbonizing the biomass raw material at a temperature of 650°C to obtain bio-coke.

The pre-drying is typically performed in outdoor air and temperature. Typically the moisture content of the biomass raw material is after the pre-drying approximately 30 to 50%.

According to an embodiment of the invention the method comprises pre-comminuting the biomass raw material. Pre-comminuting means a rough comminuting of the biomass raw material, which is done for example for transportation purposes. The particle size to which the biomass raw material is pre-comminuted depends on the process with which continuous carbonization will take place: retort, drum or fluidized bed. Typically the size of pre-comminuted biomass raw material is in the range of 20 to 100 mm.

According to an embodiment of the invention, the biomass raw material is crushed before being conveyed to impurities removal.

According to an embodiment of the invention, the mechanical impurities are removed from the biomass raw material with a vibrating screen.

According to one embodiment of the invention, the mechanical impurities are removed from the biomass raw material by gravity separation.

According to the invention, the crushed biomass raw material that is free of impurities is dried before being conveyed to carbonization.

The drying is typically performed at a temperature of 100-200°C and typically the moisture content of the comminuted biomass raw material is approximately 10 to 20 %.

According to an embodiment of the invention the biomass raw material is comminuted to processing fineness before it is carbonized. Typically the size of the biomass raw material particles is 0.1 to 50 mm, more typically 5 to 20 mm.

According to an embodiment of the invention, the biomass is carbonized at a temperature of 650 to 1000°C, typically at 750 to 1000°C.

According to an embodiment of the invention, the drying and carbonization of the biomass raw material are performed in separate reactors.

According to an embodiment of the invention, the drying of the biomass raw material is carried out in a fluidized bed reactor, in which the biomass raw material to be treated forms the bed of the drying reactor.

According to an embodiment of the invention, the carbonization of the biomass raw material is carried out in a fluidized bed reactor, in which bio-coke forms the bed of the carbonization reactor.

According to another embodiment of the invention the drying and/or carbonization of the biomass is performed in drum kilns.

According to yet another embodiment of the invention, the drying and carbonization of the biomass raw material is carried out in a shaft furnace.

According to an embodiment of the invention, a first part of the gases and dust generated in the carbonization of the biomass raw material is burned in a carbonization reactor with an air deficit. A second part of the gases generated in the carbonization of the biomass raw material is conveyed to a post-combustion boiler, where they are burned.

According to another embodiment of the invention, a first part of the gases and dust generated in the carbonization of the biomass raw material is burned in a carbonization reactor with an air deficit. Tar is recovered from a second part of the gases generated in the carbonization of the biomass raw material, and is used as a binding agent in briquetting.

According to an embodiment of the invention, the thermal energy generated in the post-combustion boiler is utilized in a power plant to produce electricity and district heat.

According to an embodiment of the invention, the cooled exhaust gases of the post-combustion boiler are conveyed to the drying and carbonization of the crushed biomass.

According to an embodiment of the invention, the particle-like bio-coke formed in carbonization is conveyed to indirect air cooling, from which the hot air is conveyed to a carbonization reactor.

According to another embodiment of the invention, the particle-like bio-coke formed in carbonization is conveyed to indirect water cooling.

According to a further embodiment of the invention, the particle-like bio-coke formed in carbonization is conveyed to direct cooling with inert gas.

According to an embodiment of the invention, the cooled bio-coke is screened and the finest fraction, rich in ash and impurities, is separated to optimize the ash content of the coke product.

According to an embodiment of the invention, the cooled and purified bio-coke is ground, mixed with a binder and water, pressed into briquettes and dried.

According to an embodiment of the invention, the size of the briquettes is 10 to 40 mm.

According to an embodiment of the invention, any biomass raw material that is frozen is de-iced before removal of impurities using the hot gases generated in drying. In this application de-icing means that any possible ice on the frozen biomass raw material is removed and the frozen biomass is de-frosted. The gases generated in the de-icing are conveyed to gas scrubbing, and the waters generated in the de-icing and gas scrubbing are conveyed to the wastewater purification step before being discharged from the cycle.

According to an embodiment of the invention, the biomass used as raw material for carbonization is tree stumps.

According to another embodiment of the invention, the biomass used as raw material for carbonization is peat.

According to a further embodiment of the invention, the biomass used as raw material for carbonization is logging waste.

According to a further embodiment of the invention, the biomass used as raw material for carbonization is reed canary grass.

According to a further embodiment of the invention, the biomass used as raw material for carbonization is straw.

According to a further embodiment of the invention the biomass used as raw material may be a mixture of any combination of the above raw materials.

According to an embodiment of the invention the bio-coke thus produced may be formed into briquettes, typically the bio-coke is pressed into briquettes.

According to an embodiment of the invention the briquettes are dried.

### LIST OF FIGURES

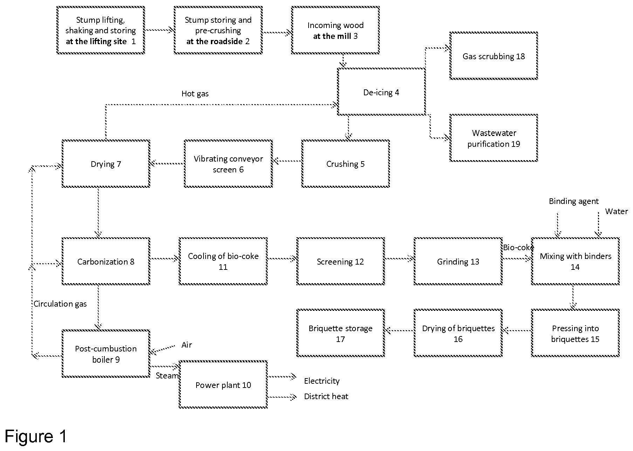

Figure 1 presents a flow chart of a bio-coke production method according to an example embodiment of the invention.

### DETAILED DESCRIPTION

The use of stump material for the production of bio-coke is not completely taken away from energy production, as part of the carbon contained in the stump material produces added value in carbonizing and in this case too energy comes from some of it.

Carbonization or pyrolysis or coking means the physical and chemical decomposition of an organic solid substance in an oxygen-free space under the effect of heat. It is the step preceding actual combustion or gasification, in which the volatile substances contained in the fuel are removed as a result of thermal decomposition forming water vapour, gas and tar components. A porous carbonized residue or coke is left behind. Carbon generated from wood is called charcoal.

Wood coke is one type of bio-coke. The material used for producing bio-coke is typically biomass or vegetal materials. These include various nutshells, waste generated in wood processing such as sawing waste, sawdust or bark. In addition, the trunks of the eucalyptus tree for example are used for production after the branches and leaves have been removed for the fabrication of eucalyptus oil.

The wood carbonization process can be divided into various steps. The first step is drying or the evaporation of water, which occurs at temperatures of 100 to 200°C. The decomposition of the wood is still minor at this stage. The decomposition of wood material starts in the second step, when mainly the oxygen-containing gases in the wood are released. This occurs at a higher temperature, i.e. around 200 to 280°C, when carbon dioxide and carbon monoxide, water and water-soluble substances such as acetic acid are released from the wood. The third step, which occurs at temperatures of 280 to 500°C, could be called a hydrocarbon step, and at this point the exothermic decomposition of the wood, i.e. the reaction, proceeds by itself and produces heat. As a result of the decomposition reactions, more acetic acid, methanol and tar are removed from the wood. The amount of gas generated is large compared to the earlier steps. The actual carbonization of the wood can be regarded as occurring at temperatures of around and above 500°C.

In practice the continuous carbonization process may be implemented at least in a retort, drum kiln and fluidized bed furnace.

When bio-coke is to be produced continuously for use in the metallurgical industry, such as in the reduction stage of ferroalloy production, the bio-coke must fulfil certain criteria. The C_{fix} content of the coke must be as high as possible, over 75%, the amount of volatiles below 1 %, the amount of alkali below 0.2%, the sulphur content below 0.07% and the phosphorus content below 0.03%. C_{fix} means fixed carbon, which is not removed along with the volatiles into the tar substances or gases, but becomes a carbonization residue, from which the ash portion has been removed. All the percentages mentioned in the text indicate percentages by weight. The coke should also be sufficiently strong when hot, so that it does not break up into dust when fed into a furnace. The electrical conductivity of the coke should be sufficiently low. The lump size of metallurgical coke should be in the region of 10 to 25 mm. Coarser coke cannot be used for example in the reduction of ferrochrome, because its electroconductivity is too high. For its part, finer coke causes the compression of the bed and as a result uneven gas distribution. The fabrication of coke with a high C_{fix} content and a low amount of volatiles requires a high carbonization temperature, i.e. it should be at least 700°C.

With low-cost biomass raw materials, there is a risk that the amount of ash and impurities may rise too high unless attention is paid to them in every process step. If the amount of impurities in bio-coke is to be minimized, this should be taken into account already at the growth and original treatment site of the renewable biomaterial. A precondition for the formation of high-quality bio-coke is that no foreign matter should be present in carbonization. For instance the bed of sand in the prior art fluidized bed furnace mentioned above causes an increase in the amount of harmful substances in the finished bio-coke product.

The batch production of coke requires the cooling and discharging of the kiln between every batch. Therefore continuous coke production eliminates expensive work stages, the energy economy is improved and the carbonization process is optimized.

The fabrication of bio-coke used in the reduction of ferroalloys from low-cost raw materials requires more work stages than conventional bio-coke production, which is why all secondary material generated during bio-coke production should be utilized to the fullest to allow overall process costs to be kept competitive. The advantage of bio-coke is that it is produced from renewable natural material, it maximizes quality and minimizes the use of energy, various emissions to air and water as well as the amount of waste generated.

An embodiment of the method according to the invention is illustrated by a flow chart in the attached Figure 1. For example, when tree stumps are used as raw material, the minimization of impurities can be taken into account already at the forest: the stumps are lifted from the ground at the logging area when it is unfrozen, during lifting the stumps are chopped into pieces, typically into two to four pieces and the soil is shaken off (1) so that the majority of the humus remains in the hole left by the stump. After this, the stumps may be stored in piles for a few weeks and in roadside storage for about a year, so that stones and sand come off the stumps more easily. The stumps are pre-comminuted, typically at the roadside, i.e. they are chipped/crushed using a crusher equipped with a screen (2). The particle size to which the stumps are comminuted depends on the process with which continuous carbonization will take place: retort, drum or fluidized bed. As a consequence, larger transportation loads are obtained than in the transport of whole stumps. The water content of the stump pieces decreases during storage and impurities are removed when they are handled dry.

The crushed pre-comminuted tree stumps to be processed are conveyed to the receiving area (3). In some cases the crushed stump material may be frozen and is first conveyed first to a de-icing treatment (4), which is carried out using hot gas obtained from a later drying step (7). If a de-icing treatment is not required, the crushed stump material is conveyed directly to comminution (5), where it is given a homogenous particle-like form. The particle size to which the stumps are comminuted depends on the process to be used for continuous carbonization: retort, drum or fluidized bed. When a fluidized bed is used, comminution is made to a smaller particle size of 5 to 20 mm. A smaller particle size, as fluidized bed processing in general, reduces carbonization time due to effective transfer of material and heat.

Since there may still be mechanical impurities adhering to the crushed stump material, such as sand, the material is transported, if necessary, on a vibrating conveyor screen (6) via a gravity separator to a buffer silo. The preferred screen size through which the particle-like material is passed is 5 to 20 mm. The particle-like crushed stump material, which has a moisture content of around 30 to 50%, is conveyed from the buffer silo to the drying step (7). Drying takes place at a temperature of 100 to 200°C and after drying the moisture content of the biomass raw material is around 10 to 20%. The drying step may be carried out in a separate reactor, such as a fluidized bed reactor, containing a bed formed of the biomass raw material to be processed. Likewise, in drum kiln carbonization, drying maybe performed in a separate drum kiln, from which the dried biomass raw material is fed into the carbonization drum kiln. Of course drying may be performed in a different type of reactor than carbonization. In accordance with another alternative, the drying step is performed for instance as a pre-treatment step in connection with a shaft furnace. The energy required for drying is obtained from the circulation gases of the post-combustion boiler (9). Drying of the biomass raw material is a precondition for effective and complete carbonization.

In addition to stumps, other logging waste, peat, straw, reed canary grass, waste wood from construction or surplus grain may be used as raw material for bio-coke. In such cases, for example the crown mass is baled and stored at the roadside, the amount of impurities being reduced as the mass dries out. Likewise, after mowing, reed canary grass is raked, crushed and baled.

The dried biomass raw material with a suitable particle size is conveyed to carbonization (8), which typically takes place at a temperature of 650 to 1000°C, more typically at a temperature of 750 to 1000°C. The carbonization step may be carried out in a reactor that operates continuously as described above, such as a fluidized bed furnace, drum kiln or shaft furnace. When carbonization is carried out in a fluidized bed reactor, it is useful to use previously formed bio-coke as the bed material to prevent impurities from contaminating the bio-coke that is being generated. Additional heating equipment to be used for heating and, if necessary, for controlling the temperature is also arranged into the reactor (not shown in detail in the figure). Preheated combustion air is fed in the carbonization step and combustion takes place with an air deficit, i.e. the amount of air supplied is below the stoichiometric amount required for combustion. Therefore only a first part of the gases formed in carbonization is burned in the carbonization reactor. The majority of the energy required for carbonization is obtained when the gases and dusts formed in carbonization burn in the carbonization reactor. Additional energy is obtained by means of the additional heating equipment and by recirculating the circulation gas of the post-combustion boiler (9) to the carbonization reactor in order to maintain a sufficient temperature. The temperature of the circulation gas conveyed to carbonization is 200 to 300°C. The properties of the bio-coke formed in carbonization are affected significantly by the final carbonization temperature and the carbonization rate. When the carbonization temperature is high, as in the method according to the invention, the product strength is improved and the volatiles content is decreased. When the temperature is around 800 to 1000°C, a product is obtained in which the amount of volatiles is only about 2%. The use of a high carbonization temperature is made possible when the ash content and amount of impurities is minimized in the pre-treatment of the biomass.

The flue gases generated in the carbonization reactor contain, in addition to reducing components, carbon dioxide and water vapour, which may react with carbon at high temperatures, decreasing the yield of bio-coke. However, the proportion of loss reactions remains low because the biomass raw material engenders a lot of gas in carbonization, which prevents the wood material or biomass raw material from coming into contact with the flue gases. The temperature of a carbonization reactor equipped with direct heating can be adjusted by means of additional air or additional heating equipment.

The hot bio-coke that is formed is cooled in a cooling reactor (11) by means of a cooling agent. In indirect cooling the cooling agent may be water or air and in direct cooling an inert gas.

The impurities and ash components of the biomass raw material, including calcium, silicon, magnesium, potassium, sodium, iron, phosphorus and sulphur, are concentrated in the finer bio-coke fraction. The ash-rich finest fraction is removed from the cooled bio-coke as required by screening (12). This allows the ash content of the final product to be controlled. The bio-coke product may continue to briquetting. The first step of briquetting is grinding (13). In the next step, the ground bio-coke is mixed (14) with water and a binding agent. The strength required for the briquette application is adjusted by the quality and quantity of the binder. The binder used may be for example starch, bentonite, molasses or tar. Tar can be recovered from the gases exiting carbonization and then used as binder in briquetting. After this the mixture of bio-coke, binder and water is pressed (15) into briquettes of a desired size, which are dried (16). The compressive strength of the briquettes is the same in every direction, and not dependent on the direction of the grain as with pieces of wood coke. Strength may be acted on by the quantity and quality of the binder as well as the briquette drying temperature. The briquette size depends on the application; for instance the coke briquette size required in ferrochrome smelting is 10 to 25 mm. The bio-coke briquettes that are produced are stored.

In indirect cooling, the heated air may be used as the preheated air for the carbonization step. If water cooling is performed, the steam that is generated is conveyed to the piping of the post-combustion boiler (9).

The flue gases that contain the second part of the gaseous, liquid and solid components formed in the carbonization reactor (8) are conveyed to the post-combustion boiler (9) and burned there. The combustion temperature in the boiler is adjusted to be such that the ash components do not melt. It is advantageous to burn also poor-quality ash-rich bio-coke in the post-combustion boiler, if it is not to be made into briquettes with lower quality requirements. Likewise, it is advantageous to burn the dust generated in the drying step (7) in the post-combustion boiler. Water is fed into the circulation gas piping in the walls of the boiler and the energy produced by combustion is recovered from the piping as steam. The steam that is generated is conveyed to the power plant (10), where it is used to produce electricity and district heat. The cooled circulation gas to be removed from the boiler, which has a temperature of around 200 to 300°C, is conveyed to carbonization and drying.

To minimize all the emissions generated in bio-coke production, the wastewater generated in any de-icing (4) of the biomass raw material is also conveyed to the wastewater purification step (19). The exhaust gases formed in the de-icing step are conveyed to condenser gas scrubbing (18), where they are scrubbed with a suitable scrubbing solution. After gas scrubbing the gases may be removed from the cycle and the wastewater that is generated is conveyed to the purification step (19), after which the water cleaned of impurities may also be removed from the cycle.

### EXAMPLES

### Example 1

36.5 t/h of pre-cleaned, crushed tree stumps are conveyed to the drying area. The moisture content of the material is 40%. After the drying step the moisture content of the material is 12% and its composition is:

| | |
|---|---|
| C | 50% |
| H | 6.5% |
| O | 41.5% |
| N | 1.4% |
| S | 0.05% |
| ash | 0.55% |

The amount of dried stump material conveyed to carbonization is 25 t/h. The carbonization produces 4.5 t/h of bio-coke . The temperature of the gas exiting the carbonization step is around 900°C and its quantity is 35000 Nm³/h. The gas contains about 32 vol.% of hydrogen and about 27 vol.% of carbon monoxide. The gas from the carbonization step is conveyed to a post-combustion boiler, where it is burned and the resulting thermal energy is transferred to the water and steam circulating in the boiler pipes, which are conveyed onward for the production of electricity and district heat. The gas burned in the boiler produces 71 MWh/h of energy. The temperature of the gas removed from the boiler for circulation is around 300°C.

### Example 2

The table below presents an example comparison of the effect of temperature on bio-coke quality.

| **Carbonization temp. °C** | **C_{fix} %** | **Volatiles %** |
|---|---|---|
| 978 | 93 | 2 |
| 715 | 85 | 11 |

## Claims

1. A method for continuous production of bio-coke to be used in metallurgical industry, **characterized in that** the method comprises:
- providing biomass raw material,
- removing mechanical impurities from the biomass raw material,
- pre-comminuting the biomass raw material,
- pre-drying the biomass raw material,
- comminuting the biomass raw material into a homogeneous particle-like form,
- drying the biomass raw material comminuted into a particle-like form, and
- carbonizing the biomass raw material at a temperature of 650 to 1000°C to obtain bio-coke.

2. The method according to claim 1, wherein the biomass raw material is comminuted (5) before being conveyed to impurities removal.

3. The method according to claim 1 or 2, wherein the mechanical impurities are removed from the biomass raw material with a vibrating screen (6).

4. The method according to any one of the preceding claims, wherein the mechanical impurities from the biomass raw material are removed by using gravity separation.

5. The method according to claim 4, wherein into a particle-like form comminuted, gravity separated impurity-free biomass raw material is dried (7) before being conveyed to carbonization.

6. The method according to any one of the preceding claims, wherein the drying and carbonization of the biomass raw material are carried out in separate reactors.

7. The method according to any one of the preceding claims, wherein the drying of the biomass raw material is carried out in a fluidized bed reactor, in which the biomass raw material to be processed forms the bed of the drying reactor.

8. The method according to any one of the preceding claims, wherein the carbonization of the biomass raw material is carried out in a fluidized bed reactor, in which bio-coke forms the bed of the carbonization reactor.

9. The method according to any one of the preceding claims, wherein the drying and/or carbonization of the biomass raw material is carried out in drum kilns.

10. The method according to any one of the preceding claims, wherein the drying and carbonization of the biomass raw material is carried out in a shaft furnace.

11. The method according to any one of the preceding claims, wherein a first part of the gases formed in the carbonization of the biomass raw material and dust is burned in the carbonization reactor with an air deficit, a second part of the gases formed in carbonization of the biomass raw material being conveyed to a post-combustion boiler, in which they are burned.

12. The method according to any one of the preceding claims, wherein a first part of the gases formed in the carbonization of the biomass raw material and dust is burned in the carbonization reactor with an air deficit, tar being recovered from a second part of the gases formed in carbonization of the biomass and used as a binder in briquetting.

13. The method according to claim 11, wherein the thermal energy generated in the post-combustion boiler is utilized in a power plant to produce electricity and district heat.

14. The method according to claim 11 or 12, wherein the cooled post-combustion boiler exhaust gases are conveyed to the drying and carbonization of the comminuted biomass raw material.

15. The method according to any one of the preceding claims, wherein the particle-like bio-coke formed in carbonization is conveyed to indirect cooling with air, from where the hot air is conveyed to the carbonization reactor.

16. The method according to any one of the preceding claims, wherein the particle-like bio-coke formed in carbonization is conveyed to indirect cooling with water.

17. The method according to any one of the preceding claims, wherein the particle-like bio-coke formed in carbonization is conveyed to indirect cooling with inert gas.

18. The method according to claim 15 or 16 or 17, wherein the cooled bio-coke is screened and the finest ash- and impurity-rich fraction is separated to optimize the ash content of the coke product.

19. The method according to any one of claims 15 to 18, wherein the cooled, purified bio-coke is ground, mixed with a binder and water, pressed into briquettes and dried.

20. The method according to claim 19, wherein the size of a briquette is 10 to 40 mm.

21. The method according to any one of the preceding claims, wherein the biomass raw material is frozen biomass raw material and it is de-iced before removal of impurities by means of the hot gases generated in drying, gases generated in the de-icing being conveyed to gas scrubbing, and the waters generated in the de-icing and gas scrubbing being conveyed to a wastewater purification step before their removal from the cycle.

22. The method according to any one of the preceding claims, wherein the biomass raw material used for carbonization is tree stumps.

23. The method according to any one of the preceding claims, wherein the biomass raw material used for carbonization is peat.

24. The method according to any one of the preceding claims, wherein the biomass raw material used for carbonization is logging waste.

25. The method according to any one of the preceding claims, wherein the biomass raw material used for carbonization is reed canary grass.

26. The method according to any one of the preceding claims, wherein the biomass raw material used for carbonization is straw.

## Patentansprüche

1. Verfahren zur kontinuierlichen Produktion von Bio-Koks, das in der Hüttenindustrie zu verwenden ist, **dadurch gekennzeichnet, dass** das Verfahren umfasst:
- Bereitstellen von Biomasse-Rohmaterial,
- Entfernen von mechanischen Verunreinigungen aus dem Biomasse-Rohmaterial,
- Vorzerkleinern des Biomasse-Rohmaterials,
- Vortrocknen des Biomasse-Rohmaterials,
- Zerkleinern des Biomasse-Rohmaterials in eine homogene partikelartige Form,
- Trocknen des in eine partikelartige Form zerkleinerten Biomasse-Rohmaterials, und
- Verkohlen des Biomasse-Rohmaterials bei einer Temperatur von 650 bis 1000 °C, um Bio-Koks zu erhalten.

2. Verfahren nach Anspruch 1, wobei das Biomasse-Rohmaterial zerkleinert (5) wird, bevor es zur Entfernung von Verunreinigungen befördert wird.

3. Verfahren nach Anspruch 1 oder 2, wobei die mechanischen Verunreinigungen mit einem Rüttelsieb (6) aus dem Biomasse-Rohmaterial entfernt werden.

4. Verfahren nach einem der vorstehenden Ansprüche, wobei die mechanischen Verunreinigungen aus dem Biomasse-Rohmaterial unter Verwendung von Schwerkrafttrennung entfernt werden.

5. Verfahren nach Anspruch 4, wobei in eine partikelartige Form zerkleinertes, schwerkraftgetrenntes verunreinigungsfreies Biomasse-Rohmaterial getrocknet (7) wird, bevor es zur Verkohlung befördert wird.

6. Verfahren nach einem der vorstehenden Ansprüche, wobei das Trocknen und die Verkohlung des Biomasse-Rohmaterials in getrennten Reaktoren ausgeführt werden.

7. Verfahren nach einem der vorstehenden Ansprüche, wobei das Trocknen des Biomasse-Rohmaterials in einem Wirbelbettreaktor ausgeführt wird, in dem das Biomasse-Rohmaterial, das verarbeitet werden soll, das Bett des Trocknungsreaktors bildet.

8. Verfahren nach einem der vorstehenden Ansprüche, wobei die Verkohlung des Biomasse-Rohmaterials in einem Wirbelbettreaktor ausgeführt wird, in dem Bio-Koks das Bett des Verkohlungsreaktors bildet.

9. Verfahren nach einem der vorstehenden Ansprüche, wobei das Trocknen und/oder die Verkohlung des Biomasse-Rohmaterials in Trommelöfen ausgeführt werden.

10. Verfahren nach einem der vorstehenden Ansprüche, wobei das Trocknen und die Verkohlung des Biomasse-Rohmaterials in einem Schachtofen ausgeführt werden.

11. Verfahren nach einem der vorstehenden Ansprüche, wobei ein erster Teil der in der Verkohlung des Biomasse-Rohmaterials gebildeten Gase und Staub unter Luftmangel im Verkohlungsreaktor verbrannt werden, wobei ein zweiter Teil der bei Verkohlung des Biomasse-Rohmaterials gebildeten Gase zu einem Nachverbrennungskessel befördert wird, in dem sie verbrannt werden.

12. Verfahren nach einem der vorstehenden Ansprüche, wobei ein erster Teil der in der Verkohlung des Biomasse-Rohmaterials gebildeten Gase und Staub unter Luftmangel im Verkohlungsreaktor verbrannt werden, wobei aus einem zweiten Teil der bei Verkohlung der Biomasse gebildeten Gase Teer gewonnen und als ein Binder beim Brikettieren verwendet wird.

13. Verfahren nach Anspruch 11, wobei die im Nachverbrennungskessel erzeugte Wärmeenergie in einem Kraftwerk genutzt wird, um Strom und Fernwärme zu produzieren.

14. Verfahren nach Anspruch 11 oder 12, wobei die gekühlten Nachverbrennungskessel-Abgase zum Trocknen und zur Verkohlung des zerkleinerten Biomasse-Rohmaterials befördert werden.

15. Verfahren nach einem der vorstehenden Ansprüche, wobei das bei Verkohlung gebildete partikelartige Bio-Koks zu indirekter Kühlung mit Luft befördert wird, von wo die heiße Luft zum Verkohlungsreaktor befördert wird.

16. Verfahren nach einem der vorstehenden Ansprüche, wobei das bei Verkohlung gebildete partikelartige Bio-Koks zu indirekter Kühlung mit Wasser befördert wird.

17. Verfahren nach einem der vorstehenden Ansprüche, wobei das bei Verkohlung gebildete partikelartige Bio-Koks zu indirekter Kühlung mit Inertgas befördert wird.

18. Verfahren nach Anspruch 15 oder 16 oder 17, wobei das gekühlte Bio-Koks gesiebt und die feinstasche- und verunreinigungshaltige Fraktion getrennt wird, um den Aschegehalt des Koksprodukts zu optimieren.

19. Verfahren nach einem der Ansprüche 15 bis 18, wobei das gekühlte, gereinigte Bio-Koks gemahlen, mit einem Binder und Wasser gemischt, in Briketts gepresst und getrocknet wird.

20. Verfahren nach Anspruch 19, wobei die Größe eines Briketts 10 bis 40 mm beträgt.

21. Verfahren nach einem der vorstehenden Ansprüche, wobei das Biomasse-Rohmaterial gefrorenes Biomasse-Rohmaterial ist und es vor der Entfernung von Verunreinigungen mittels der beim Trocknen erzeugten Heißgase enteist wird, beim Enteisen erzeugte Gase zu Gaswäsche befördert werden, und die beim Enteisen und der Gaswäsche erzeugten Wässer vor ihrer Entfernung aus dem Zyklus zu einem Abwasserreinigungsschritt befördert werden.

22. Verfahren nach einem der vorstehenden Ansprüche, wobei das zur Verkohlung verwendete Biomasse-Rohmaterial Baumstümpfe sind.

23. Verfahren nach einem der vorstehenden Ansprüche, wobei das zur Verkohlung verwendete Biomasse-Rohmaterial Torf ist.

24. Verfahren nach einem der vorstehenden Ansprüche, wobei das zur Verkohlung verwendete Biomasse-Rohmaterial Holzeinschlag ist.

25. Verfahren nach einem der vorstehenden Ansprüche, wobei das zur Verkohlung verwendete Biomasse-Rohmaterial Rohrglanzgras ist.

26. Verfahren nach einem der vorstehenden Ansprüche, wobei das zur Verkohlung verwendete Biomasse-Rohmaterial Stroh ist.

## Revendications

1. Procédé de production continue de bio-coke à utiliser dans l'industrie métallurgique, **caractérisé en ce que** le procédé comprend :
- la fourniture d'une matière première de biomasse,
- l'élimination d'impuretés mécaniques de la matière première de biomasse,
- la pré-fragmentation de la matière première de biomasse,
- le pré-séchage de la matière première de biomasse,
- la fragmentation de la matière première de biomasse en une forme de type particule homogène,
- le séchage de la matière première de biomasse fragmentée en une forme de type particule, et
- la carbonisation de la matière première de biomasse à une température de 650 à 1 000 °C pour obtenir du bio-coke.

2. Procédé selon la revendication 1, dans lequel la matière première de biomasse est fragmentée (5) avant d'être acheminée vers l'élimination d'impuretés.

3. Procédé selon la revendication 1 ou 2, dans lequel les impuretés mécaniques sont éliminées de la matière première de biomasse avec un tamis vibreur (6).

4. Procédé selon l'une quelconque des revendications précédentes, dans lequel l'élimination des impuretés mécaniques de la matière première de biomasse se fait en utilisant une séparation par gravité.

5. Procédé selon la revendication 4, dans lequel dans une forme de type particule la matière première de biomasse exempte d'impuretés, séparée par gravité et fragmentée est séchée (7) avant d'être acheminée vers la carbonisation.

6. Procédé selon l'une quelconque des revendications précédentes, dans lequel le séchage et la carbonisation de la matière première de biomasse sont réalisés dans des réacteurs séparés.

7. Procédé selon l'une quelconque des revendications précédentes, dans lequel le séchage de la matière première de biomasse est réalisé dans un réacteur à lit fluidisé, dans lequel la matière première de biomasse à traiter forme le lit du réacteur de séchage.

8. Procédé selon l'une quelconque des revendications précédentes, dans lequel la carbonisation de la matière première de biomasse est réalisée dans un réacteur à lit fluidisé, dans lequel le bio-coke forme le lit du réacteur de carbonisation.

9. Procédé selon l'une quelconque des revendications précédentes, dans lequel le séchage et/ou la carbonisation de la matière première de biomasse sont réalisés dans des fours à tambour.

10. Procédé selon l'une quelconque des revendications précédentes, dans lequel le séchage et la carbonisation de la matière première de biomasse sont réalisés dans un four à cuve.

11. Procédé selon l'une quelconque des revendications précédentes, dans lequel une première partie des gaz formés lors de la carbonisation de la matière première de biomasse et de la poussière est brûlée dans le réacteur de carbonisation avec un manque d'air, une seconde partie des gaz formés lors de la carbonisation de la matière première de biomasse étant acheminée vers une chaudière post-combustion, dans laquelle ils sont brûlés.

12. Procédé selon l'une quelconque des revendications précédentes, dans lequel une première partie des gaz formés lors de la carbonisation de la matière première de biomasse et de la poussière est brûlée dans le réacteur de carbonisation avec un manque d'air, du goudron étant récupéré depuis une seconde partie des gaz formés lors de la carbonisation de la biomasse et utilisé en tant que liant pour le briquetage.

13. Procédé selon la revendication 11, dans lequel l'énergie thermique générée dans la chaudière post-combustion est utilisée dans une centrale électrique pour produire de l'électricité et du chauffage urbain.

14. Procédé selon la revendication 11 ou 12, dans lequel les gaz d'échappement de chaudière post-combustion refroidis sont acheminés vers le séchage et la carbonisation de la matière première de biomasse fragmentée.

15. Procédé selon l'une quelconque des revendications précédentes, dans lequel le bio-coke de type particule formé lors de la carbonisation est acheminé vers un refroidissement indirect avec de l'air, d'où l'air chaud est acheminé vers le réacteur de carbonisation.

16. Procédé selon l'une quelconque des revendications précédentes, dans lequel le bio-coke de type particule formé lors de la carbonisation est acheminé vers un refroidissement indirect avec de l'eau.

17. Procédé selon l'une quelconque des revendications précédentes, dans lequel le bio-coke de type particule formé lors de la carbonisation est acheminé vers un refroidissement indirect avec un gaz inerte.

18. Procédé selon la revendication 15 ou 16 ou 17, dans lequel le bio-coke refroidi est tamisé et la fraction riche en impureté et avec les cendres les plus fines est séparée pour optimiser la teneur en cendres du produit de coke.

19. Procédé selon l'une quelconque des revendications 15 à 18, dans lequel le bio-coke purifié et refroidi est broyé, mélangé avec un liant et de l'eau, pressé en briquettes et séché.

20. Procédé selon la revendication 19, dans lequel la taille d'une briquette est de 10 à 40 mm.

21. Procédé selon l'une quelconque des revendications précédentes, dans lequel la matière première de biomasse est une matière première de biomasse congelée et elle est dégivrée avant l'élimination d'impuretés au moyen des gaz chauds générés lors du séchage, des gaz générés lors du dégivrage étant acheminés vers l'épuration des gaz, et les eaux générées lors du dégivrage et de l'épuration des gaz étant acheminées vers une étape de purification d'eaux usées avant leur élimination du cycle.

22. Procédé selon l'une quelconque des revendications précédentes, dans lequel la matière première de biomasse utilisée pour la carbonisation est des souches d'arbre.

23. Procédé selon l'une quelconque des revendications précédentes, dans lequel la matière première de biomasse utilisée pour la carbonisation est la tourbe.

24. Procédé selon l'une quelconque des revendications précédentes, dans lequel la matière première de biomasse utilisée pour la carbonisation est un résidu de coupe.

25. Procédé selon l'une quelconque des revendications précédentes, dans lequel la matière première de biomasse utilisée pour la carbonisation est le roseau.

26. Procédé selon l'une quelconque des revendications précédentes, dans lequel la matière première de biomasse utilisée pour la carbonisation est la paille.
